# EUROPEAN PATENT SPECIFICATION

(11) **EP 1 380 006 B1**
(45) Date of publication and mention of the grant of the patent: **03.05.2006**
(21) Application number: 01912929.5
(22) Date of filing: 22.02.2001
(51) Int. Cl.: G06F 3/033, G06K 9/22, G06K 7/00, G06K 9/20, G06K 9/00, G09G 3/28, G09G 5/00, G08C 21/00

(54) **HANDWRITTEN CHARACTER RECORDING AND RECOGNITION DEVICE**
EINRICHTUNG ZUM AUFZEICHNEN UND ERKENNEN HANDSCHRIFTLICHER ZEICHEN
DISPOSITIF D'ENREGISTREMENT ET DE RECONNAISSANCE DE CARACTERES MANUSCRITS

(43) Date of publication of application: 14.01.2004
(73) Proprietor: ThinkPen LLC, Madison, WI 53703 (US)
(72) Inventor: FISHER, Edward, Madison, WI 53705 (US)
(74) Representative: Tollett, Ian
(86) International application number: PCT/US2001/005689
(87) International publication number: WO 2002/069247

(56) References cited:
- GB-A- 2 306 669
- US-A- 5 103 486
- US-A- 5 484 966
- US-A- 5 852 434
- US-A- 5 959 617

## Description

The invention relates to handwritten character input and recognition devices. More particularly the device provides a means to electronically record handwritten graphics and record and recognize hand written characters.

There are numerous patents related to this type of device. The distinguishing features lie in the method or methods used to sense the movement of the device to the writing or marking surface. All such devices employ a button, contactor, or force sensor to sense when the apparatus is in contact with the writing surface. The combination of the above data can be used to record the movement and marking of the pen.

One method attempts to measure forces applied to the pen tip or pen cartridge by using strain gauges, force sensors, piezo-electric devices, or the like (US4751741, US5215397). These forces are used to calculate the movement of the device across the page.

Another method uses accelerometers or gyroscopes to sense acceleration and deceleration of the pen (US188392, US5247137, US5517579).

An optical technique is used to image a known pattern on the page and use this information to calculate movement of the apparatus in US5226091.

US 5,852,434 which represents the basis for the preamble of claim 1, discloses a digitizer and absolute position determination device for indicating the instantaneous position and movement of a stylus on a surface. It proposes the use of a data surface (e.g., paper) formatted with a position-related code for indicating X-Y coordinates capable of reflecting a frequency of light. The stylus comprising a writing element has a light source of a frequency for illuminating the position-related code. The frequency of light is absorbed by the data surface but reflected by the position-related code onto a charge-coupled device (CDD) located within the stylus. The coordinate information from the CCD is sent to a computer for processing and finally the desired information is output to the user.

Finally there are also approaches that use a combination of the above sensing techniques. These include a combination of force and optical sensing (US5215397) and a combination of acceleration and ultrasonics (US5517579).

The invention is an electronic recording and computing device that resides within or on a pen shaped object for the purpose of recording and processing handwritten text or graphics. The device includes a marking implement that may be a pencil, ink pen, non-marking tip, chalk, crayon, marker, paint, laser marking tool, or any other instrument used for writing or marking. The device records motion and marking with one or more of each of the following components: image sensor, light source, light detector, force sensor, contactor, microprocessor, volatile and non-volatile memory, analog to digital converter. Movement of the apparatus is sensed and recorded by means of the image sensor and optical navigation software which tracks microscopic and/or macroscopic features of the writing surface. The orientation of the pen to the writing surface is electronically sensed and recorded by casting a plane wave of light on the surface and detecting the amount received back with several light sensors placed in a specific orientation with each other. This information is used to correct optical navigation data that is distorted by the orientation of the pen to the writing surface. Data may be processed by on board application software and/or stored for later retrieval. Data may be transmitted through a docking station or via a wireless technology. The transmitted information may later be used with software for tasks such as optical character recognition, signature authentication, or image reconstruction.

It is an object of the invention to eliminate the need for expensive and inaccurate accelerometers or gyroscopes, to eliminate unreliable and inaccurate mechanical systems, and to use inexpensive off the shelf electronic components. It is furthermore an object of the present invention to rely primarily on optical methods for sensing movement and orientation of the device to the marking surface because these well developed technologies allow for a high level of accuracy and repeatability.

### DESCRIPTION OF FIGURES

1. An embodiment of the device including 1 image sensor, 2 fiber optic image pipe, 3 button or force sensor, 4 writing implement cartridge and force sensor actuator, 5 light source and light sensor array, and 6 telecentric lens system.
2. A possible arrangement of light sensors (filled) and light sources (not-filled) used for sensing orientation of the apparatus relative to the marking surface.
3. A plane wave of light may be created with an array of light sources thus providing consistent light intensity across a large area.

### FIRST EMBODIMENT

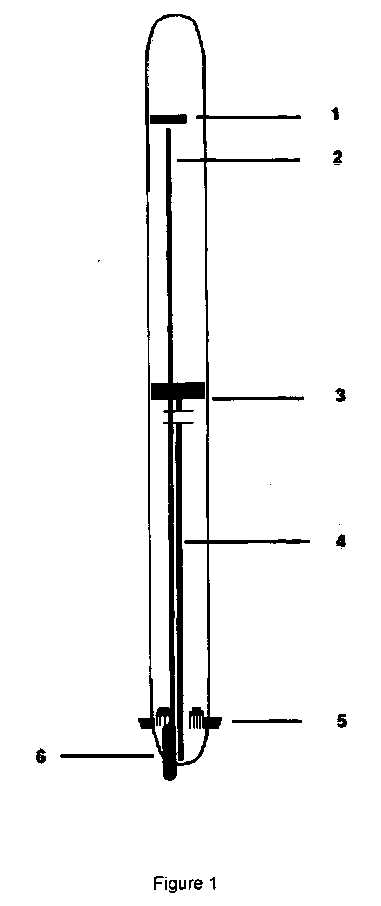

A first embodiment of the device is shown in FIG 1 and is constructed in accordance with claims of the present invention. A pen shaped enclosure provides a housing for all components of the system such that the apparatus may operate autonomously.

The embodiment also comprises a marking implement for writing characters or making graphical markings on paper or other surface. The marking implement in this first embodiment is ink. The marking implement resides within a cartridge 4 such that the cartridge 4 may move within the pen so that it may engage a force sensor 3 for detecting when the tip of the device is in contact with the marking surface (FIG. 1).

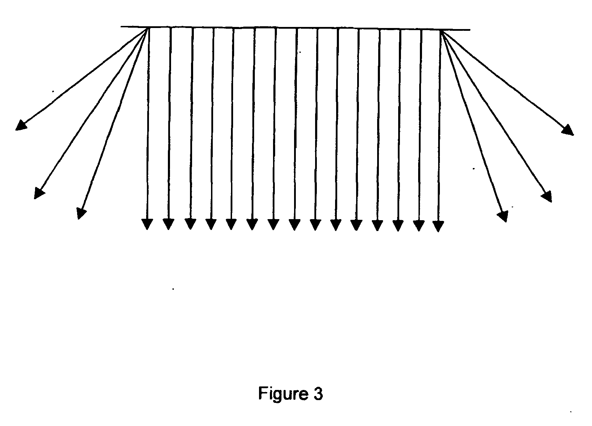

This embodiment is also comprised of one or more infrared light emitting diodes 5 arranged in a manner to produce a plane wave of light which is to be incident on the marking surface (FIG 3).

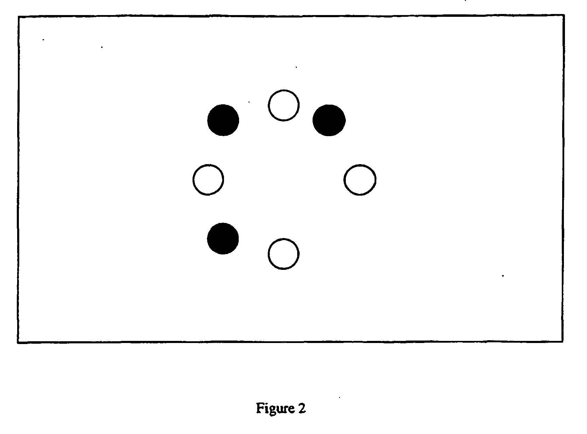

The embodiment is also comprised of three infrared phototransistors for detecting infrared light from said light emitting diodes 5 that has reflected off the marking surface. The phototransistors are arranged in a specific orientation to each other in this embodiment of the device (FIG 2). The amount of infrared light detected is used to calculate the distance and/or angle of inclination of the apparatus to the marking surface. Using data obtained from two light sensors the angle of inclination of the apparatus relative to the writing surface may be calculated in two orthogonal directions.

The embodiment is also comprised of an imaging system that includes a charged coupled device image sensor 1, two lenses 6, and a fibre optic image pipe 2 (FIG 1). The two lenses 6 are chosen such that the image obtained by the imaging system 6 provides a telecentric view of the page, this ensures there is little or no distortion in the image.
This imaging system 6 is used to rapidly obtain images of macroscopic and/or microscopic features of the marking surface. These images are used in conjunction with optical navigation software capable of comparing these images and mathematically calculating the motion of the apparatus relative to the marking surface.

The embodiment also consists of a microprocessor, memory, and application software that includes said optical navigation as well as software necessary for processing data obtained from said phototransistors. This information may be stored in memory for later retrieval or transmitted in real time to a personal computer or other computing device.

The embodiment of the device also includes a display and several buttons so the user may interact with the device and invoke application software or data transmission.

This embodiment of the device includes electronic hardware and/or software to support the transmission of data via a wired or wireless means.

## Claims

1. A handwriting implement wherein the implement may be manipulated over a writing surface to simulate or generate the creation of written matter, and wherein such manipulation generates machine-readable data representing the written matter, the implement comprising:
a. a light source (5) which emits incident light onto the writing surface;
b. an image sensor (1) which captures the image of the writing surface;
c. a processor for receiving captured images from the image sensor (1) during the motion of the implement over the writing surface, and generating data therefrom representing the motion of the implement over the writing surface; **characterised in that** the implement further comprises;
d. an array of light sensors, separate from the image sensor, which capture incident light reflected from the writing surface; and **in that** the processor is also for receiving captured incident light signals from the light sensors, and generating data therefrom representing the orientation of the implement with respect to the writing surface.

2. A handwriting implement as claimed in claim 1 further comprising a telecentric lens system (6) through which the image sensor (1) captures the image of the writing surface.

3. A handwriting implement as claimed in any preceding claim further comprising a light pipe (2) directing the image of the writing surface to the image sensor (1).

4. A handwriting implement as claimed in any preceding claim further comprising an implement tip to which a force sensor (3) is connected, wherein the force sensor detects contact of the tip with a writing surface to actuate data generation.

5. A handwriting implement as claimed in any preceding claim wherein the implement tip includes an ink-dispensing marking implement.

6. A handwriting implement as claimed in any preceding claim wherein the light source (5) emits a plane wave of incident light.

7. A handwriting implement as claimed in any preceding claim wherein the light emitted by the light source (5) is in the infrared spectrum.

8. A handwriting implement as claimed in any preceding claim wherein the light sensors detect light in wavelengths in the infrared spectrum.

9. A kit comprising a handwriting implement as claimed in any preceding claim and at least one of the following:
on board application software;
a docking station;
wireless technology for data transmission;
optical character recognition software;
signature authentication software; and
image reconstruction software.

## Revendications

1. Outil d'écriture manuelle dans lequel l'outil peut être manipulé au-dessus d'une surface d'écriture pour simuler ou générer la création d'un écrit, et dans lequel cette manipulation génère des données lisibles par machine représentant l'écrit, l'outil comprenant :
a. une source lumineuse (5) qui émet une lumière incidente sur la surface d'écriture ;
b. un capteur d'images (1) qui capture l'image de la surface d'écriture ;
c. un processeur permettant de recevoir les images capturées à partir du capteur d'images (1) lors du mouvement de l'outil au-dessus de la surface d'écriture, et de générer des données à partir de celles-ci, représentant le mouvement de l'outil au-dessus de la surface d'écriture ; **caractérisé en ce que** l'outil comprend en outre ;
d. un groupe de capteurs optiques, séparés du capteur d'images, qui capturent la lumière incidente réfléchie à partir de la surface d'écriture ; et **en ce que** le processeur permet également de recevoir des signaux de la lumière incidente capturée à partir des capteurs optiques, et de générer des données à partir de ceux-ci, représentant l'orientation de l'outil par rapport à la surface d'écriture.

2. Outil d'écriture manuelle selon la revendication 1, comprenant en outre un système de lentille télécentrique (6) à travers lequel le capteur d'images (1) capture l'image de la surface d'écriture.

3. Outil d'écriture manuelle selon l'une quelconque des revendications précédentes, comprenant en outre un conduit de lumière (2) dirigeant l'image de la surface d'écriture vers le capteur d'images (1).

4. Outil d'écriture manuelle selon l'une quelconque des revendications précédentes, comprenant en outre un embout de l'outil auquel un capteur de force (3) est relié, dans lequel le capteur de force détecte le contact de l'embout avec une surface d'écriture pour actionner la génération de données.

5. Outil d'écriture manuelle selon l'une quelconque des revendications précédentes, dans lequel l'embout de l'outil inclut un outil de traçage dispensant de l'encre.

6. Outil d'écriture, manuelle selon l'une quelconque des revendications précédentes, dans lequel la source lumineuse (5) émet une onde plane de lumière incidente.

7. Outil d'écriture manuelle selon l'une quelconque des revendications précédentes, dans lequel la lumière émise par la source lumineuse (5) est dans le spectre infrarouge.

8. Outil d'écriture manuelle selon l'une quelconque des revendications précédentes, dans lequel les capteurs optiques détectent la lumière dans des longueurs d'onde du spectre infrarouge.

9. Kit comprenant un outil d'écriture manuelle selon l'une quelconque des revendications précédentes et au moins l'un des éléments suivants:
un logiciel d'application embarqué ;
une station d'accueil ;
une technologie sans fil pour la transmission de données ;
un logiciel de reconnaissance optique des caractères ;
un logiciel d'authentification de la signature ; et
un logiciel de restitution des images.

## Patentansprüche

1. Handschriftgerät, wobei das Gerät über eine Schreiboberfläche manipuliert werden kann, um die Erstellung einer Schriftsache zu simulieren oder zu erzeugen, und wobei eine solche Manipulation maschinenlesbare Daten erzeugt, die die Schriftsache verkörpern, wobei das Gerät umfasst:
a) eine Lichtquelle (5), die auf die Schreiboberfläche einfallendes Licht emittiert;
b) einen Bildsensor (1), welcher das Bild der Schreiboberfläche erfasst;
c) einen Prozessor zum Empfangen erfasster Bilder von dem Bildsensor (1) während der Bewegung des Geräts über der Schreiboberfläche und um davon Daten zu erzeugen, welche die Bewegung des Geräts über der Schreiboberfläche verkörpern;
**dadurch gekennzeichnet, dass** das Gerät ferner umfasst:
d) ein Array von von dem Bildsensor seperaten Lichtsensoren, die einfallendes Licht erfassen, das von der Schreiboberfläche reflektiert wird, und dass der Prozessor auch zum Empfangen erfasster einfallender Lichtsignale von den Lichtsensoren dient und um daraus Daten zu erzeugen, die die Orientierung des Geräts in Bezug auf die Schreiboberfläche verkörpern.

2. Handschriftgerät nach Anspruch 1, ferner umfassend ein telezentrisches Linsensystem (6), durch welches der Bildsensor (1) das Bild der Schreiboberfläche erfasst.

3. Handschriftgerät nach einem der voranstehenden Ansprüche, ferner umfassend einer Lichtleiter (2), der das Bild der Schreiboberfläche zu dem Bildsensor (1) leitet.

4. Handschriftgerät nach einem der voranstehenden Ansprüche, ferner umfassend eine Gerätespitze, mit der ein Kraftsensor (3) verbunden ist, wobei der Kraftsensor einen Kontakt der Spitze mit einer Schreiboberfläche detektiert um eine Datenerzeugung auszulösen.

5. Handschriftgerät nach einem der voranstehenden Ansprüche, wobei die Gerätespitze ein Tinte spendendes Markierungsgerät umfasst.

6. Handschriftgerät nach einem der voranstehenden Ansprüche, wobei die Lichtquelle (5) eine ebene Welle einfallenden Lichts emittiert.

7. Handschriftgerät nach einem der voranstehenden Ansprüche, wobei das von der Lichtquelle (5) emittierte Licht Licht im infraroten Spektrum ist.

8. Handschriftgerät nach einem der voranstehenden Ansprüche, wobei die Lichtsensoren Licht mit Wellenlängen im infraroten Spektrum detektieren.

9. Satz umfassend ein Handschriftgerät nach einem der voranstehenden Ansprüche und mindestens eines der Folgenden:
integrierte Anwendungssoftware;
eine Dockingstation;
kabellose Technologie zur Datenübertragung;
optische Zeichenerkennungssoftware;
Unterschriftenauthentifizierungssoftware;
Bildrekonstruktionssoftware.
